# EUROPEAN PATENT SPECIFICATION

(11) **EP 1 667 853 B1**
(45) Date of publication and mention of the grant of the patent: **11.11.2009**
(21) Application number: 03758689.8
(22) Date of filing: 30.09.2003
(51) Int. Cl.: B60C 11/18, B29D 30/30

(54) **PNEUMATIC TIRE AND PROCESS FOR ITS MANUFACTURE**
LUFTREIFEN UND VERFAHREN FÜR SEINE HERSTELLUNG
PNEU ET SON PROCEDE DE FABRICATION

(43) Date of publication of application: 14.06.2006
(73) Proprietor: Pirelli Tyre S.p.A., 20126 Milano (IT)
(72) Inventor: LOSI, Piero, c/o Pirelli Tyre S.p.A., I-20126 Milano (IT); DE CANCELLIS, Pierluigi, Pirelli Tyre S.p.A., I-20126 Milano (IT); LO PRESTI, Gaetano, c/o Pirelli Tyre S.p.A., I-20126 Milano (IT); NOTO, Rodolfo, c/o Pirelli Tyre S.p.A., I-20126 Milano (IT); LACAGNINA, Claudio, c/o Pirelli Tyre S.p.A., I-20126 Milano (IT)
(74) Representative: Bottero, Claudio
(86) International application number: PCT/IT2003/000586
(87) International publication number: WO 2005/030503

(56) References cited:
- EP-A- 0 839 675
- AT-B- 331 658
- DE-A- 19 945 264

## Description

### Background of the invention

The present invention relates to a pneumatic tire for two-wheeled or four-wheeled vehicles and in particular, but not exclusively, to a pneumatic tire for motorvehicles.

Specifically, the present invention refers to a pneumatic tire comprising a carcass structure having at least one carcass ply, and at least one annular reinforcing structure associated to said carcass ply, a tread band made of an elastomeric material at a radially outer position with respect to the carcass structure, a belt structure interposed between the carcass structure and the tread band and a pair of axially opposite sidewalls on the carcass structure, wherein the tread band is of the type comprising a plurality of axially adjacent sectors.

### Prior art

In the field of pneumatic tires for vehicles one of the most felt needs is that of ensuring that the performances of the pneumatic tire and, in particular, its road holding, remain as constant as possible as the tread band inevitably wears down.

In known pneumatic tires, a performance alteration is almost invariably observed after a certain wear of the tread band.

Such a wear, in fact, reduces in the first place the height of the tread band determining a substantially proportional increase of the drift rigidity of the aforementioned band; in the second place and if the tread is patterned, the wear also modifies to an ever greater extent the geometry of the tread pattern and, more specifically, the extension of the area covered by the grooves formed in the tread band, generally proportional to the so-called sea/land ratio.

It should be specified herein that in the present description and in the subsequent claims, the term sea/land ratio is used to indicate the ratio between the area occupied by the grooves present in the tread band or in any portion thereof and the total area of the tread band or, respectively, of any portion thereof.

Generally speaking and due to the tapering of the grooves along a radially inner direction, the extension of the area covered by the grooves progressively decreases as the tire wears down with a corresponding increase of the transversal rigidity of the tread band and an altered behavior of the pneumatic tire on the road.

This increased transversal rigidity of the tread band, due to the thickness reduction of the tread band in grooveless pneumatic tires, and also due to a reduction of the sea/land ratio in patterned pneumatic tires, usually involves a greater thrust of the pneumatic tire at the same steer angle with a possible unbalancing between the front axle and the rear axle of the vehicle, the driver having in any case to change his/her driving style to compensate this different behavior of the pneumatic tire.

References are known which describe pneumatic tires provided with a tread band comprising a plurality of axially adjacent sectors.

In the field of pneumatic tires for motorcycles it was for example suggested by Japanese patent application JP 05-256646 to improve the tire performance along a curve by making a tread band provided with an equatorial portion having a lower hardness and a higher tangδ as compared to those of opposite shoulder portions of the tread band itself.

On the other side, Japanese patent application JP 02-314293 has suggested, in order to prevent a partial wear of the tread band with the exfoliation of elastomeric material layers and the formation of cracks in the material, to realize a tread band provided with two radially superposed layers, each of which is in turn axially divided into two suitably shaped portions made of different materials. More specifically, the construction suggested by this document foresees that the two portions of each tread band layer have end segments having a reduced thickness at the equatorial plane of the pneumatic tire in such a way that the two portions of the layer may axially fit into one another.

In the field of anti-static pneumatic tires it was also suggested by US patent No. 6,523,585 to improve the wear uniformity of the tread band and to reduce the noisiness of the pneumatic tire, by realizing a tread band comprising a plurality of axially adjacent sectors respectively made of an electrically insulating elastomeric material and of an electrically conducting elastomeric material. According to the teachings of this reference, the aforementioned electrically insulating and electrically conducting elastomeric materials must have specific mechanical characteristics and, in particular, a respective hardness such that the ratio between the Shore A hardness at room temperature of the electrically conducting sectors and the Shore A hardness at room temperature of the electrically insulating sectors must be less than 1.10.

In the field of anti-skid tires is was also suggested by Japanese patent application JP 2001-158211 to embed a ribbed rubber in a tread segment partially exposed to at least one rib surface of the ribbed patterned tread segment, wherein the shore hardness of the ribbed rubber is lower than the shore hardness of the embedded tread rubber in order to improve motor vehicle control on ice providing excellent drivability, abrasion resistance and the absence of dust pollution.

### Problem underlying the invention

The present invention has the object of providing a pneumatic tire provided with a tread band comprising a plurality of axially adjacent sectors which allows to maintain substantially constant the road holding of the pneumatic tire as the tread band wears down.

### Summary of the invention

According to a first aspect of the invention, this object is achieved by a pneumatic tire as defined in attached claim 1.

The Applicant has, in particular, found that thanks to a particular combination of a specific geometric structure of the axially adjacent sectors of the tread band with specific mechanical characteristics of these sectors it is possible to obtain a tread band which is capable to compensate the increase of transversal rigidity of geometric nature due to the wear of the tread band and proportional to the thickness reduction of the band and, in the case of a patterned pneumatic tire, also to the reduction of the sea/land ratio with a progressive increase in the transversal deformability of the portions of elastomeric material defined between the grooves along a radially inner direction.

More specifically, the Applicant has found that the aforementioned object can be achieved thanks to a tread band comprising:
i) a plurality of first sectors axially spaced apart and tapered along a radially inner direction, and
ii) a plurality of second sectors axially spaced apart and tapered along a radially outer direction,
wherein said first and second sectors are axially positioned side-by-side one after the other along the transversal development of the tread band,
wherein the ratio between the Shore A hardness at 23°C of the first sectors, measured according to standard DIN 53505, and the Shore A hardness at 23°C of the second sectors, measured according to standard DIN 53505, is greater than 1.10, and
wherein the ratio between the modulus of elasticity (E') under compression at 23°C of said first sector (9) and the modulus of elasticity (E') under compression at 23°C of said second sectors (10) is greater than about 1.15.

The Applicant, while not wishing to be bound by any interpretative theory, observes that with the increase along the radially inner direction of the width of the second sectors consisting of a less rigid vulcanized elastomeric material, it is possible to effectively achieve the aforementioned effect of counterbalancing the transversal rigidity increase with a suitable composition of the tread band.

The pneumatic tire thus allows to maintain substantially constant the road behavior of the pneumatic tire in particular as far as its response to trajectory corrections set by the driver by means of the steering wheel is concerned, avoiding a possible unbalancing between the front axle and the rear axle of the vehicle and allowing the driver not to significantly change his/her driving style.

This technical effect is particularly appreciated by those who adopt a so-called "up-to-the-limit" driving style.

In a preferred embodiment of the invention, the ratio between the Shore A hardness at 23°C of the first sectors, measured according to standard DIN 53505, and the Shore A hardness at 23°C of the second sectors, measured according to standard DIN 53505, is comprised between about 1.12 and about 1.70 and, still more preferably, between about 1.20 and about 1.40.

In this way, is was advantageously possible to achieve an optimal compromise between the performance in terms of road holding as wear increases and the other performances required to the pneumatic tire, such as for example driving comfort, noise, wear resistance and smoothness.

Preferably and in order to achieve the aforementioned ratios, the Shore A hardness at 23°C of the first sectors, measured according to standard DIN 53505, is comprised between about 60 and about 75, whereas the Shore A hardness at 23°C of the second sectors, measured according to standard DIN 53505, is comprised between about 35 and about 65.

By observing the aforementioned values of Shore A hardness of the tapered and axially adjacent sectors of the tread band, it has been found that it is possible to compensate in an optimal way the transversal rigidity increase due to the thickness reduction of the tread band and, in the case of patterned pneumatic tires, also due to a reduction of the sea/land ratio as a consequence of the tread band wear of the pneumatic tire, with a gradual increase of the portions of the less rigid elastomeric material which get in touch with the ground.

Still more preferably, the Shore A hardness at 23°C of the first sectors, measured according to standard DIN 53505, is comprised between about 65 and about 70, whereas the Shore A hardness at 23°C of the second sectors, measured according to standard DIN 53505, is comprised between about 50 and about 60.

For the purposes of the invention, the tapered and axially adjacent sectors of the tread band can be obtained by forming and vulcanizing suitable elastomeric materials the composition of which can be easily determined by a man skilled in the art so as to achieve the aforementioned desired Shore A hardness values at 23°C.

It should be specified herein that in the present description and in the subsequent claims, the term "elastomeric material" is used to indicate a composition comprising at least one elastomeric polymer and at least one reinforcing filler. Preferably, such a composition also comprises additives such as, for example, a cross-linking agent and/or a plasticizer. Thanks to the presence of the cross-linking agent, such a material may be cross-linked by heating, so as to form the end product.

Preferably, the first sectors tapered along the radially inner direction of the tread band have a modulus of elasticity (E') under compression at 23°C comprised between about 7 and about 13 MPa, whereas the second sectors, axially spaced apart and tapered along the radially outer direction have a modulus of elasticity (E') under compression at 23°C comprised between about 5 and about 8 MPa.

In the following description and in the subsequent claims, the values of the modulus of elasticity E' under compression, as well as the viscous modulus E", are intended to be measured by means of conventional apparatuses by submitting a cylindrical test piece of vulcanized elastomeric material having a length of 25 mm and a diameter of 14 mm, subjected to compression preloading up to a longitudinal deformation of 25% of its original height and kept at a temperature of 23°C, to a dynamic sinusoidal deformation of a maximum width of ± 3.50% of the height under preloading, with a frequency of 100 cycles per second (100 Hz).

By observing the aforementioned values of the modulus of elasticity under compression E' at 23°C of the tapered sectors of the tread band, it has been found that it is advantageously possible to compensate in an optimal way the transversal rigidity increase both for grooveless and patterned pneumatic tires, achieving an optimal compromise between the performances in terms of wear of the tread band of the pneumatic tire and in terms of resistance to the transversal stresses which the tire is subjected to mainly during running along a curve or in mixed courses.

More preferably, the aforementioned first sectors of the tread band have a modulus of elasticity (E') under compression at 23°C comprised between about 9 and about 11 MPa, whereas the second sectors of the tread band have a modulus of elasticity (E') under compression at 23°C comprised between about 5.5 and about 7 MPa.

In a preferred embodiment of the invention, the ratio between the modulus of elasticity E' under compression at 23°C of the first sectors and the modulus of elasticity E' under compression at 23°C of the second sectors of the tread band is comprised between about 1.4 and 2.0.

It has been noted that by observing the ratios of the modulus of elasticity E' under compression it is advantageously possible to achieve an optimal compromise between the performances in terms of wear of the tread band of the pneumatic tire and in terms of resistance to the transversal stresses which the tire is subjected to mainly during running along a curve or in mixed courses.

According to a preferred embodiment of the invention, the tapered and axially adjacent sectors of the tread band are axially distributed one after the other with a substantially constant pitch along the transversal development of the tread band.

Within the framework of the present description and in the subsequent claims, the term "pitch" of the tapered and axially adjacent sectors of the tread band, is used to indicate the distance measured within a cross-section and along the axial direction between the middle axes of two consecutive sectors. Within the framework of the present definition, the middle axis of each sector is the axis which divides in two substantially equal parts the radially inner and the radially outer faces of the sector itself.

Thanks to the aforementioned axial distribution of the tread band sectors, it is advantageously possible to maintain the transversal rigidity of the tread band at substantially uniform values substantially along the entire axial development thereof.

According to a preferred embodiment of the invention, the tapered and axially adjacent sectors of the tread band are provided with axially opposite side walls defining a tapering angle measured with respect to a plane extending substantially perpendicularly to the radially inner and radially outer faces of the sectors comprised between about 30° and about 80°.

It has been found that in such a way it is advantageously possible to optimize the gradual increase of the yield along the transversal direction of the portions of elastomeric material defined between the grooves to compensate both the thickness reduction of the tread band and the possible reduction of the sea/land ratio deriving from the tread band wear of the pneumatic tire.

The Applicant has found that the side walls of the tapered and axially adjacent sectors of the tread band can have different geometric shapes provided that the desired tapering is maintained along radially opposite directions of the adjacent sectors.

Thus, in a first preferred embodiment, the axially opposite side walls of the tapered and axially adjacent sectors of the tread band can be substantially rectilinear.

Alternatively, the axially opposite side walls of the tapered and axially adjacent sectors of the tread band can be provided with at least one substantially curvilinear portion.

The man skilled in the art can easily select among these possible configurations the most appropriate or the most advantageous one as a function of the production methods adopted for the manufacture of the tread band.

As stated above, the pneumatic tire of the invention can be used to equip both two-wheeled and four-wheeled vehicles.

Within the framework of these possible uses and according to a preferred embodiment, the pneumatic tire of the invention comprises a tread band provided with a tread pattern in which the grooves defined therein are formed in the sectors of the tread band tapered along a radially inner direction and consisting of a more rigid elastomeric material.

Alternatively, the grooves defined in the tread pattern can be formed in the sectors of the tread band tapered along a radially outer direction and consisting of a more yielding elastomeric material.

Although the positioning of the grooves of the tread pattern is not critical for the purposes of the invention, arranging the grooves in the sectors consisting of the same type of elastomeric material and, still more preferably, in the sectors tapered along a radially inner direction consisting of the more rigid elastomeric material, is preferable to limit down to a minimum the occurrence of phenomena of irregular wear of the tread band.

In a preferred embodiment of the invention, the tapered and axially adjacent sectors of the tread band are radially extending substantially for the entire thickness of the tread band, so as to achieve the desired technical effect of maintaining the characteristics of transversal rigidity substantially for the whole useful life of the pneumatic tire.

In an alternative preferred embodiment of the invention, the pneumatic tire can be further provided with a layer of a suitable elastomeric material placed between the tread band and the belt structure.

In such a way, it is advantageously possible to optimize - if desired - specific characteristics of the pneumatic tire such as, for example, the rolling resistance.

According to a further aspect of the invention, a process for manufacturing a pneumatic tire is provided as defined in attached claim 16.

### Brief description of the drawings

Additional features and advantages of the invention will be better apparent from the following description of some preferred embodiments of pneumatic tires and of processes for their manufacture according to the invention, which description is made by way of non limiting indication, with reference to the attached drawings, wherein:
- Figure 1 shows a cross-section view of a first embodiment of a pneumatic tire according to the present invention;
- Figure 2 shows an enlarged scale cross-section view of some details of the pneumatic tire of Figure 1;
- Figure 3 shows an enlarged scale cross-section view of some details of a second embodiment of a pneumatic tire according to the present invention;
- Figure 4 shows a schematic plan view of a robotized station for making the tread band of the pneumatic tire according to the invention;
- Figure 5 shows a schematic plan view of a robotized station for making the tread band of the pneumatic tire according to the invention on a substantially cylindrical auxiliary drum;
- Figure 6 shows a schematic perspective view of a robotized station for making the tread band of the pneumatic tire according to the invention on a substantially rigid toroidal support.

### Detailed description of the preferred embodiments

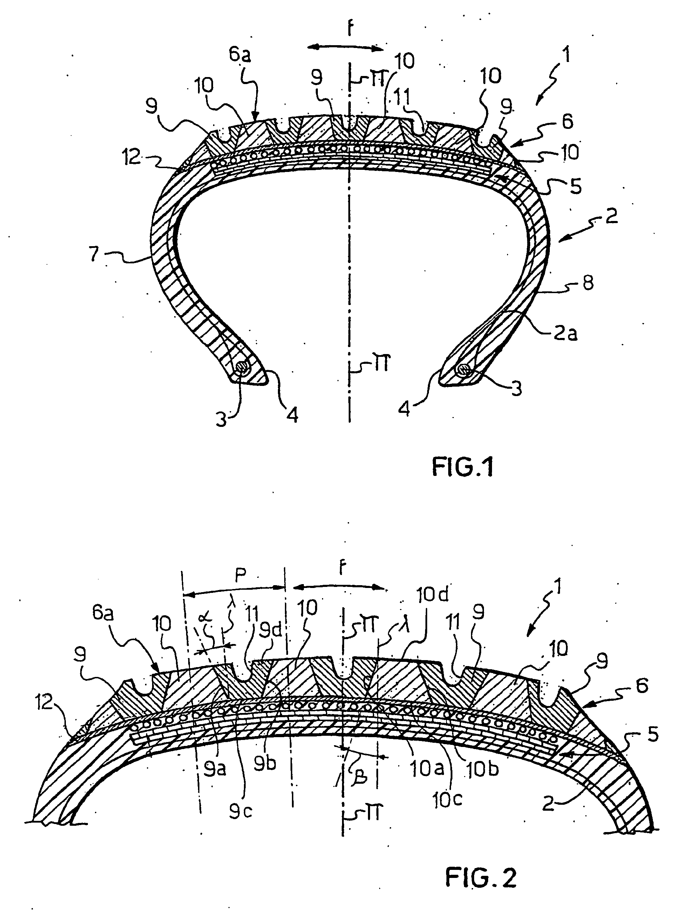

With reference to figures 1-2, a pneumatic tire made according to a first preferred embodiment of the invention, which in the specific example is intended to equip a motorvehicle, is generally indicated at 1.

The pneumatic tire 1 comprises a carcass structure 2 provided with at least one carcass ply 2a the opposite side edges of which are externally folded up around respective annular reinforcing structures 3, usually known as "bead cores", each enclosed in a bead 4 defined along an inner circumferential edge of the pneumatic tire 1 and at which the pneumatic tire itself engages on a rim (not shown) forming part of the wheel of a vehicle.

The pneumatic tire 1 also comprises a tread band 6 made of an elastomeric material at a radially outer position with respect to the carcass structure 2, a belt structure 5 interposed between the carcass structure 2 and the tread band 6 and a pair of sidewalls 7, 8 in axially opposite positions on the carcass structure 2.

Preferably, the belt structure 5 includes one or more belt layers made for example with a fabric of metal cords or wires embedded in a rubber sheet, arranged parallel to each other in each layer and crossed with respect to those of the adjacent layer and with one or more so-called 0° cords spirally and coaxially wound on the pneumatic tire 1 at a radially outer position with respect to the crossed cord fabrics.

According to the embodiment illustrated in figure 1, the tread band 6 circumferentially applied around the belt structure 5 comprises a plurality of first sectors 9 axially spaced apart and tapered along a radially inner direction and a plurality of second sectors 10, axially spaced apart and tapered along the opposite direction, i.e. along a radially outer direction.

Preferably, the first and second sectors 9, 10 of the tread band 6 are radially extending substantially for the entire thickness of the tread band itself.

The aforementioned first and second sectors 9, 10 are axially positioned side-by-side one after the other along the transversal development of the tread band 6 and are made of suitable different elastomeric materials such that the ratio between the Shore A hardness at 23°C of the sectors 9, measured according to standard DIN 53505, and the Shore A hardness at 23°C of the sectors 10, measured according to standard DIN 53505, is greater than 1.10 and, more preferably, comprised between about 1.12 and about 1.70 and, still more preferably, comprised between about 1.20 and about 1.40.

Preferably and in order to achieve the aforementioned ratios, the Shore A hardness at 23°C, measured according to standard DIN 53505, of the first sectors 9 is comprised between about 60 and about 75, whereas the Shore A hardness at 23°C, measured according to standard DIN 53505, of the second sectors 10 is comprised between about 35 and about 65.

More preferably, the Shore A hardness at 23°C of the first sectors 9, measured according to standard DIN 53505, is comprised between about 65 and about 70, whereas the Shore A hardness at 23°C of the second sectors 10, measured according to standard DIN 53505, is comprised between about 50 and about 60.

Preferably, the first sectors 9 of the tread band 6 have a modulus of elasticity (E') under compression at 23°C comprised between about 7 and about 13 MPa, whereas the second sectors 10 have a modulus of elasticity (E') under compression at 23°C comprised between about 5 and about 8 MPa.

More preferably, the first sectors 9 of the tread band 6 have a modulus of elasticity (E') under compression at 23°C comprised between about 9 and about 11 MPa, whereas the second sectors 10 have a modulus of elasticity (E') under compression at 23°C comprised between about 5.5 and about 7 MPa.

In this way, the first and second sectors 9, 10 of the tread band 6, tapered and axially positioned side-by-side, advantageously allow thanks to their different geometric and mechanical characteristics to maintain substantially constant the transversal rigidity of the tread band 6 as it wears down and allow to achieve an optimum compromise between the performances in terms of wear of the tread band 6 and the resistance to the transversal stresses which the tread is subjected to mainly during running along a curve or in mixed courses.

The tread band 6 thus made is provided with a radially outer surface 6a arranged to get in touch with the ground and usually equipped with a tread pattern comprising a plurality of grooves 11 which define a plurality of rubber ribs and rubber blocks.

According to a preferred feature of the invention, the first and second sectors 9, 10 of the tread band 6 are axially distributed one after the other with a substantially constant pitch p along the transversal development of the tread band 6.

Preferably, moreover, the first and second sectors 9, 10 of the tread band 6 are substantially trapezoidal and are provided with axially opposite side walls 9a, 9b and 10a, 10b defining respective tapering angles α, β measured with respect to a plane λ - extending substantially perpendicularly to the radially inner faces 9c, 10c and to the radially outer faces 9d, 10d of the sectors - comprised between about 30° and about 80°.

Preferably, the axially opposite side walls 9a, 9b and 10a, 10b of said first and second sectors 9, 10 of the tread band 6 are substantially rectilinear.

Alternatively, the axially opposite side walls 9a, 9b and 10a, 10b of the tapered and axially adjacent sectors of the tread band can be provided with at least one substantially curvilinear portion.

The man skilled in the art can easily select among these possible configurations the most appropriate or the most advantageous one as a function of the production methods adopted for the manufacture of the tread band.

Preferably, furthermore, the grooves 11 are formed in the first sectors 9 of the tread band 6 so as to limit, down to a minimum the occurrence of phenomena of irregular wear of the tread band.

In the preferred embodiment illustrated in figures 1 and 2, finally, the pneumatic tire 1 further comprises a layer 12 of a suitable elastomeric material interposed between the tread band 6 and the belt structure 5.

Although the pneumatic tire 1 of this preferred embodiment has been illustrated with just one layer including the tapered and axially adjacent sectors 9, 10, this does not mean that the tread band 6 cannot comprise two or more radially superposed layers in order to satisfy specific and contingent application requirements.

Clearly, moreover, the number and width of the transversal development of the first and second sectors 9, 10 of the tread band 6 can be different with respect to those exemplified for merely illustrating and not limiting purposes in figures 1 and 2 and can be easily determined by a man skilled in the art according to specific application requirements of the pneumatic tire 1.

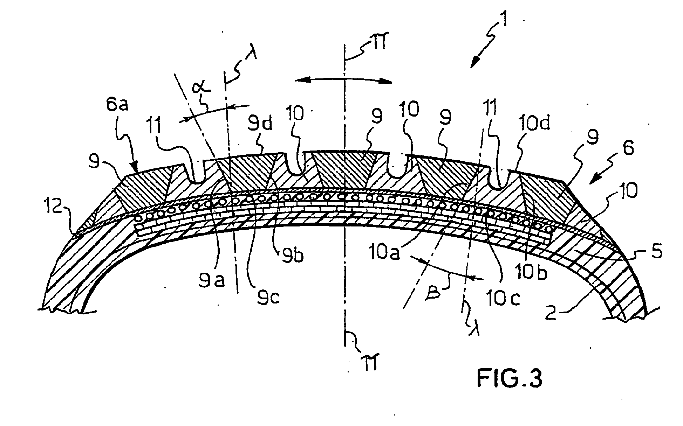

In figure 3 a further preferred embodiment of the pneumatic tire 1 of the invention is illustrated.

In the following description and in such figures, the elements of the pneumatic tire 1 which are structurally or functionally equivalent to those previously illustrated with reference to the embodiment shown in Figures 1-2 will be indicated with the same reference numerals and will not be described any further.

In the embodiment illustrated in figure 3, the grooves 11 are formed in the second sectors 10 of the tread band 6, so as to achieve also in this case substantially the same overall technical effects of the pneumatic tire 1 illustrated in figures 1 and 2.

In the following example, provided for indicating and not limiting purposes, some formulations of preferred elastomeric materials which can be used for making the first and second sectors 9, 10 of the tread band 6 of a pneumatic tire according to the invention shall now be indicated.

### EXAMPLE

Elastomeric materials have been prepared, designated with A and B in the following Table 1, which can be used for making the first and second sectors 9, 10 according to the present invention of the tread band 6. In the Table, all of the amounts are expressed in phr.

**TABLE 1**

| Ingredients | material A (first sectors 9) | material B (second sectors 10) |
|---|---|---|
| E-SBR 1712 | 70 | 70 |
| E-SBR 1500 | 30 | 30 |
| carbon black N234 | 30 | 25 |
| SiO₂ | 35 | 30 |
| SiO₂ binding agent | 7 | 6 |
| aromatic oil | 10 | 18 |
| stearic acid | 1.5 | 1.5 |
| ZnO | 2.5 | 2.5 |
| 6PPD | 2 | 2 |
| DPG | 1 | 1 |
| TBBS | 1.5 | - |
| CBS | - | 1.5 |
| soluble sulfur | 1.3 | 1 |

The ingredients used were the following:
- E-SBR 1712 = butadiene-styrene copolymer prepared in emulsion commercially available with the trade name of KRYNOL®1712 (BAYER);
- E-SBR 1500 = butadiene-styrene copolymer prepared in emulsion commercially available with the trade name of KRYLENE®1500 (BAYER);
- carbon black N234 = a product available on the market with the trade name of VULCAN®7H (CABOT CORPORATION);
- SiO₂ = silica available on the market with the trade name of ULTRASIL® VN3 (DEGUSSA);
- SiO₂ binding agent = solid composition including 50% carbon black (N330), 50% bis(3-triethoxysilyl-propyl)tetrasulfide commercially available with the trade name of X50S® (DEGUSSA);
- aromatic oil = a product available on the market with the trade name of MOBILOIL®90 (MOBIL);
- stearic acid = a product available on the market with the trade name of STEARINA®TP8 (MIRACHEM);
- ZnO = a product available on the market with the trade name of ZINKOXYD AKTIV® (BAYER);
- 6PPD = N-1,3-dimethylbutyl-N'-phenyl-p-phenylendiamine available on the market with the trade name of VULCANOX®4020 (BAYER);
- DPG = diphenylguanidine, available on the market with the trade name of VULKACIT®D (BAYER);
- TBBS = N-t-butyl-2-benzothiazyl-sulfenamide, available on the market with the trade name of VULKACIT®NZ (BAYER);
- CBS = N-cyclohexyl-2-benzothiazyl-sulfenamide, available on the market with the trade name of VULKACIT®CZ (BAYER);
- soluble sulfur = a product available on the market with the trade name of RUBERSUL®400 (REPSOL DERIVADOS).

According to techniques conventional *per se* and known in the art, the aforementioned elastomeric materials were subjected to vulcanization and then to a series of tests having the purpose of measuring some typical parameters of the vulcanized materials. The parameters taken into consideration were the following:
SHORE A hardness = measured at 23°C according to standard DIN 53505;
E' 23°C = modulus of elasticity under compression measured at 23°C according to the procedure described hereinabove;
Tangδ 23°C = ratio between the viscous modulus (E") and the modulus of elasticity (E') measured at 23°C according to the procedure described hereinabove;
CA 1 = traction force (referred to the section of the test piece) to have a deformation of 100%, measured according to standard DIN 53504;
CA 3 = traction force (referred to the section of the test piece) to have a deformation of 300%, measured according to standard DIN 53504.

The results of the tests carried out are shown in the following Table 2.

**TABLE2**

| Parameter | material A (first sectors 9) | material B (second sectors 10) |
|---|---|---|
| SHORE A hardness | 70 | 55 |
| E' 23°C [MPa] | 10.2 | 6.0 |
| Tangδ 23°C | 0.290 | 0.250 |
| CA 1 [MPa] | 3.26 | 1.57 |
| CA 3 [MPa] | 14.7 | 7.6 |

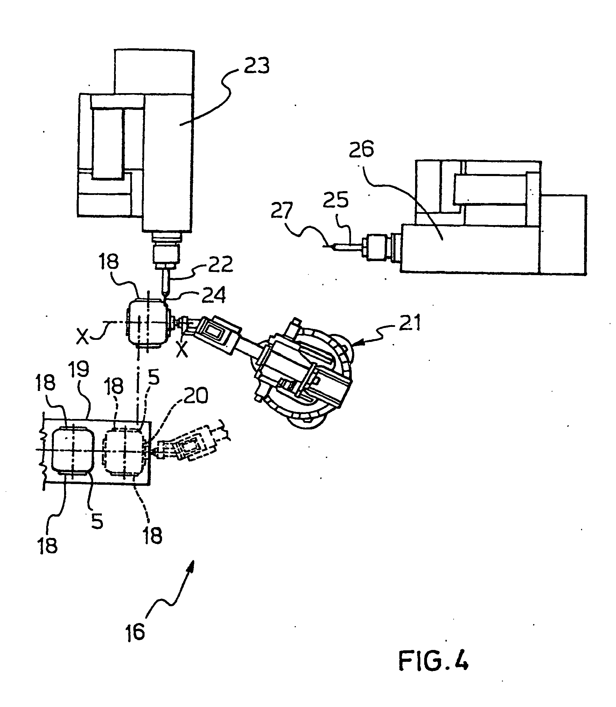

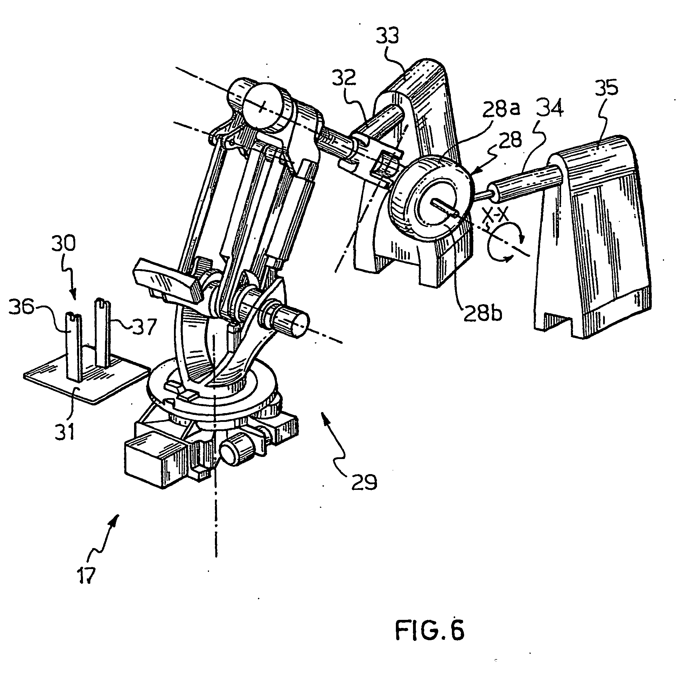

With reference to figures 4, 5 and 6, respective work stations shall now be described, generally indicated at 16 in figures 4 and 5 and 17 in figure 6, intended to make the tread band 6 with axially adjacent sectors of the pneumatic tire 1 within the framework of preferred embodiments of the manufacturing process according to the invention.

In the embodiment illustrated in figure 4, a robotized work station intended to manufacture the tread band 6 of the pneumatic tire 1 illustrated in figure 1 is generally indicated at 16.

The work station 16 is associated to a conventional manufacturing plant for the production of pneumatic tires, or for carrying out part of the working operations foreseen in the production cycle of the pneumatic tires themselves, plant otherwise not illustrated being known per se.

In such a plant, apparatuses known *per se* and not illustrated are also present for manufacturing the carcass structure 2 and the annular reinforcing structure 3 associated thereto on a supporting element capable to assume a substantially toroidal configuration, such as for example a manufacturing drum 18. known *per se*, as well as for subsequently forming the belt structure 5 in a radially outer position with respect to the carcass structure 2.

The work station 16 comprises a robotized arm known per se, generally indicated at 21 and preferably of the anthropomorphic type with seven axes, intended to pick up each drum 18 supporting the carcass structure 2, the annular reinforcing structure 3 and the belt structure 5 from a pick up position 20, defined at the end of a conveyor belt 19 or other suitable transporting means, to a delivery position of the sectors 9, 10 of the tread band 6.

More specifically, the delivery position of the sectors 9 tapered along a radially inner direction of the tread band 6 is defined at a first delivery member 22 of an extruder 23, adapted to provide at least one first continuous elongated element consisting of an elongated element 24 made of a suitable elastomeric material having a suitable size in cross-section, whereas the delivery position of the sectors 10 tapered along a radially outer direction of the tread band 6 is defined at a second delivery member 25 of an extruder 26, adapted to provide at least one second continuous elongated element consisting of an elongated element 27 also consisting of a suitable elastomeric material having a suitable size in cross section.

With reference to the work station 16 described above and to Figure 4, a first preferred embodiment of the process for manufacturing a pneumatic tire of this invention shall now be described.

In a series of preliminary steps carried out upstream of the work station 16, the carcass structure 2 comprising the annular reinforcing structure 3 and the belt structure 5 are manufactured and shaped on the drum 18 which assumes and then determines a substantially toroidal shape of the pneumatic tire under construction. Said drum 18 is then transported by the conveyor belt 19 to the pick up position 20.

In a subsequent step, the robotized arm 21 positions the drum 18 in the first delivery position defined at the first delivery member 22 of the elongated element 24 made of the first elastomeric material having after vulcanization a predetermined Shore A hardness at 23°C and intended to form the sectors 9 of the tread band 6 tapered along a radially inner direction.

In such a delivery position, the robotized arm 21 rotates the drum 18 about its rotation axis X-X and carries out a relative displacement between the delivery member 22 and the drum 18 by also imparting to the latter a translational movement along a direction substantially parallel to the aforementioned rotation axis X-X.

Concurrently with the rotation and translation movement of the drum 18 the first delivery member 22 delivers the elongated element 24 at a radially outer position with respect to the belt layer 5 so as to form the sectors 9 of the tread band 6.

Advantageously, the rotation and translation movement of the drum 18 is suitably driven in such a way as to form a plurality of sectors 9 axially spaced apart by the predetermined pitch p.

Preferably, the delivery of the elongated element 24 is carried out by forming a plurality of coils axially arranged side-by-side and/or radially superposed so as to define the sectors 9.

In a subsequent step, the robotized arm 21 positions the drum 18 in the second delivery position defined at the second delivery member 25 of the elongated element 27 made of the second elastomeric material intended to form the sectors 10 of the tread band 6 tapered along a radially outer direction and having after vulcanization a Shore A hardness such that the ratio between the Shore A hardness at room temperature, measured according to standard DIN 53505 of the first vulcanized elastomeric material and the Shore A hardness at room temperature, measured according to standard DIN 53505 of this second vulcanized elastomeric material is greater than 1.10.

Also in this second delivery position, the robotized arm 21 rotates the auxiliary drum 18 about its rotation axis X-X and carries out a relative displacement between the delivery member 25 and the auxiliary drum 18 also imparting to the latter a translational movement along a direction substantially parallel to the aforementioned rotation axis X-X.

Concurrently with the rotation and translation movement of the auxiliary drum 18, the second delivery member 25 delivers the elongated element 27 at a radially outer position with respect to the belt layer 5 so as to form the sectors 10 of the tread band 6 between the sectors 9 previously formed.

Also in this case, the rotation and translation movement of the drum 18 is suitably driven so as to form a plurality of sectors 10 axially spaced apart by the predetermined pitch p.

Also in this step, the delivery of the elongated element 27 is preferably carried out by forming a plurality of coils axially arranged side-by-side and/or radially superposed.

At the end of this second deposition step, the tread band 6 of the green pneumatic tire being manufactured may be deemed to be complete for which reason the drum 18 is transported in a way known *per se* and not shown to the subsequent work stations of the plant.

According to the invention, the deposition sequence of the sectors 9, 10 is not critical, for which reason it is also possible to foresee that the sectors 10 are formed before the sectors 9 at a radially outer position with respect to the belt layer 5.

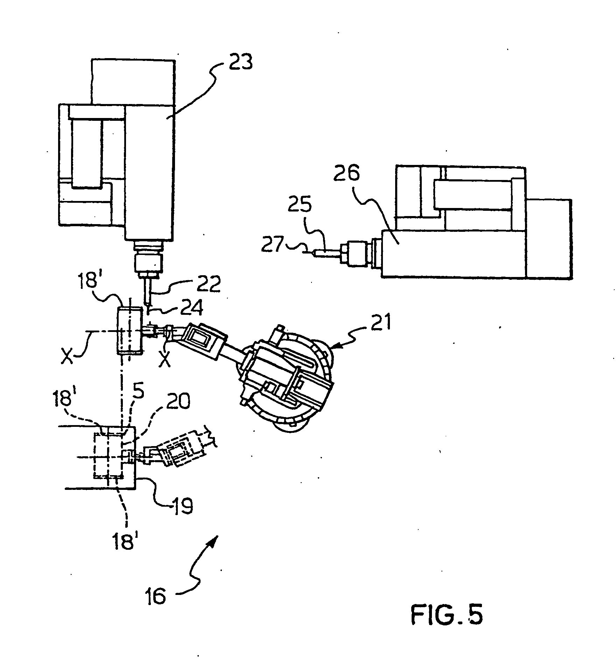

In a variant of the previous embodiment of the process according to the invention, illustrated with reference to Figure 5, a substantially cylindrical auxiliary drum 18' is used on which the belt structure 5 is assembled. The auxiliary drum 18' is moved substantially in the same way as the drum 18 previously illustrated.

More precisely, the auxiliary drum 18' is positioned at the first delivery member 22 of the first elastomeric material; subsequently, an elongated element 24 of said first elastomeric material is delivered by the delivery member 22 onto the belt structure 5, preferably carrying out a relative displacement between the first delivery member 22 and the auxiliary drum 18' so as to form the sectors 9 of the tread band 6 tapered along a radially inner direction.

Subsequently, the auxiliary drum 18' is positioned at the second delivery member 25 of the second elastomeric material, and an elongated element 27 delivered by the member 25 is deposited on the belt structure 5, preferably carrying out a relative displacement between the second delivery member 25 and the auxiliary drum 18' so as to form the sectors 10 of the tread band 6 between the sectors 9 previously formed.

Also in this embodiment, the steps of delivering the aforementioned elongated elements of elastomeric material are preferably carried out by rotating the auxiliary drum 18' about its rotation axis.

Similarly, the aforementioned delivering steps are carried out by forming a plurality of coils axially arranged side-by-side and/or radially superposed so as to define the first and second sectors 9, 10 of the tread band 6.

Preferably, finally, the relative displacement between the delivery members 22 and 25 and the auxiliary drum 18' is carried out by imparting to the auxiliary drum 18' a translational movement along a direction substantially parallel to its rotation axis.

Also in this case, the deposition sequence of the sectors 9, 10 is not critical, for which reason it is possible to foresee that the sectors 10 are formed before the sectors 9 at a radially outer position with respect to the belt layer 5.

At the end of the deposition of the tread band 6, the belt structure-tread band assembly is associated to the remaining parts of the pneumatic tire being manufactured waiting on a different manufacturing drum. The subsequent shaping of the pneumatic tire finally allows to obtain the green pneumatic tire to be vulcanized.

These preferred embodiments of the process according to the invention have, in particular, an advantageous and effective application when it is desired to exploit a conventional production line, making use indeed of at least one manufacturing drum on which the semifinished products which shall constitute the pneumatic tire are at least partially formed, said conventional production line being integrated with a final robotized station for manufacturing the tread band with axially adjacent sectors described above.

In the embodiment illustrated in Figure 6, a work station intended to manufacture the tread band 6 of the pneumatic tire 1 is generally indicated at 17.

The work station 17 is in particular associated to a highly automated plant for manufacturing pneumatic tires, or for carrying out part of the working operations foreseen in the production cycle of the pneumatic tires themselves, a plant otherwise not illustrated being known *per se.*

Within the framework of these working operations it is advantageously foreseen to manufacture the different parts of the pneumatic tire 1 directly on a support 28, substantially toroidal and preferably substantially rigid, having an outer surface 28a, 28b substantially shaped according to the inner configuration of the pneumatic tire itself.

Within such a plant, robotized stations not illustrated herein are also present for manufacturing on the toroidal support 28 the carcass structure 2 comprising the annular reinforcing structure 3 and for the subsequent formation of the belt structure 5 at a radially outer position with respect to the carcass structure 2.

The work station 17 comprises a robotized arm known *per se,* generally indicated at 29 and preferably of the anthropomorphic type with seven axes, intended to pick up each support 28 carrying the carcass structure 2, the annular reinforcing structure 3 and the belt structure 5 from a pick up position 30, defined at the end of two supporting arms 36, 37 of a trestle 31 or other suitable supporting means, to a delivery position of the sectors 9 and 10 of the tread band 6.

More specifically, the delivery position of the sectors 9 of the tread band 6 tapered along a radially inner direction is defined at a first delivery member 32 of an extruder 33, adapted to provide at leat one first continuous elongated element consisting of an elongated element (not visible in figure 6) made of a suitable first elastomeric material having a suitable size in cross section, whereas the delivery position of the sectors 10 of the tread band 6 tapered along a radially outer direction is defined at a second delivery member 34 of an extruder 35, adapted to provide at least a second continuous elongated element consisting of an elongated element (also not visible in figure 6) consisting of a suitable second elastomeric material having a suitable size in cross section.

Further structural and functional details of the robotized arm 29 are for example described in International patent application WO 00/35666 in the name of the present Applicant, the description of which is herein incorporated by reference.

With reference to the work station 17 described above and to Figure 6, a further preferred embodiment of the process for manufacturing a pneumatic tire of this invention shall now be described.

In a series of preliminary steps carried out upstream of the work station 17 in a series of robotized stations, the carcass structure 2, the annular reinforcing structure 3 and the belt structure 5 are manufactured on the toroidal support 28 which is then transported to the pick up position 30.

In a subsequent step, the robotized arm 29 positions the toroidal support 28 in the first delivery position defined at the first delivery member 32 of the elongated member consisting of the first elastomeric material having after vulcanization a predetermined Shore A hardness at 23°C and intended to form the sectors 9 of the tread band 6.

In such a delivery position, the robotized arm 29 rotates the support 28 about its rotation axis X-X and carries out a relative displacement between the delivery member 32 and the support 28 also imparting to the latter a translational movement along a direction substantially parallel to the aforementioned rotation axis X-X.

Simultaneously with the rotation and translation movement of the support 28 the first delivery member 32 delivers the elongated element at a radially outer position with respect to the belt layer 5 so as to form the sectors 9 of the tread band 6.

Preferably, the delivery of the elongated element is carried out by forming a plurality of coils axially arranged side-by-side and/or radially superposed so as to define the sectors 9.

In a subsequent step, the robotized arm 29 positions the support 28 in the second delivery position defined at the second delivery member 34 of the elongated element consisting of the second elastomeric material having after vulcanization a Shore A hardness such that the ratio between the Shore A hardness at room temperature, measured according to standard DIN 53505 of the first vulcanized elastomeric material and the Shore A hardness at room temperature, measured according to standard DIN 53505 of this second vulcanized elastomeric material is greater than 1.10.

Also in this second delivery position, the robotized arm 29 rotates the support, 28 about its rotation axis X-X and carries out a relative displacement between the delivery member 34 and the support 28 also imparting to the latter a translational movement along a direction substantially parallel to the aforementioned rotation axis X-X.

Simultaneously with the rotation and translation movement of the support 28 the second delivery member 34 delivers the elongated element at a radially outer position with respect to the belt layer 5 so as to form the sectors 10 of the tread band 6 between the sectors 9 previously formed.

Also in this case, the delivery of the elongated element is preferably carried out by forming a plurality of coils axially arranged side-by-side and/or radially superposed.

Also in this case, the deposition sequence of the sectors 9, 10 is not critical, for which reason it is possible to foresee that the sectors 10 are formed before the sectors 9 at a radially outer position with respect to the belt layer 5.

At the end of this second deposition step, the tread band 6 of the green pneumatic tire being manufactured may be deemed to be complete for which reason the support 28 is transported, in a way known *per se* and not shown, to the subsequent work stations of the plant.

This different preferred embodiment of the process according to the invention has in particular an advantageous and effective application when it is desired to use production techniques which allow to minimize or, possibly, eliminate the production and storage of the semifinished products, for example by adopting process solutions which allow to make the individual components by directly applying them on the pneumatic tire being manufactured according to a predetermined sequence by means of a plurality of robotized stations.

Repeated tests carried out by the Applicant have shown that that the pneumatic tires according to the invention fully achieve the object of maintaining substantially constant the road holding as the tread band wears down.

## Claims

1. Pneumatic tire (1) comprising a carcass structure (2) having at least one carcass ply (2a), and at least one annular reinforcing structure (3) associated to said carcass ply (2a), a tread band (6) made of an elastomeric material at a radially outer position with respect to said carcass structure (2), a belt structure (5) interposed between said carcass structure (2) and said tread band (6) and a pair of axially opposite sidewalls (7, 8) on said carcass structure (2),
wherein the tread band (6) comprises:
i) a plurality of first sectors (9) axially spaced apart and tapered along a radially inner direction, and
ii) a plurality of second sectors (10) axially spaced apart and tapered along a radially outer direction,
wherein said first (9) and second (10) sectors are axially positioned side-by-side one after the other along the transversal development of the tread band (6),
wherein the ratio between the Shore A hardness at 23°C of the first sectors (9), measured according to standard DIN 53505, and the Shore A hardness at 23°C of the second sectors (10), measured according to standard DIN 53505, is greater than 1.10, and
wherein the ratio between the modulus of elasticity (E') under compression at 23°C of said first sectors (9) and the modulus of elasticity (E') under compression at 23°C of said second sectors (10) is greater than about 1.15.

2. Pneumatic tire (1) according to claim 1, wherein the ratio between the Shore A hardness at 23°C of the first sectors (9), measured according to standard DIN 53505, and the Shore A hardness at 23°C of the second sectors (10), measured according to standard DIN 53505, is comprised between about 1.12 and about 1.70.

3. Pneumatic tire (1) according to claim 1, wherein the Shore A hardness at 23°C of the first sectors (9), measured according to standard DIN 53505, is comprised between about 60 and about 75.

4. Pneumatic tire (1) according to claim 1, wherein the Shore A hardness at 23°C of the second sectors (10), measured according to standard DIN 53505, is comprised between about 35 and about 65.

5. Pneumatic tire (1) according to claim 1, wherein said first sectors (9) of the tread band (6) have a modulus of elasticity (E') under compression at 23°C comprised between about 7 and about 13 MPa.

6. Pneumatic tire (1) according to claim 1, wherein said second sectors (10) of the tread band (6) have a modulus of elasticity (E') under compression at 23°C comprised between about 5 and about 8 MPa.

7. Pneumatic tire (1) according to claim 1, wherein the ratio between the modulus of elasticity (E') under compression at 23°C of said first sectors (9) and the modulus of elasticity (E') under compression at 23°C of said second sectors (10) is comprised between about 1.4 and about 2.0.

8. Pneumatic tire (1) according to claim 1, wherein said first and second sectors (10) of the tread band (6) are axially distributed one after the other with a substantially constant pitch (p) along the transversal development of the tread band (6).

9. Pneumatic tire (1) according to claim 1, wherein said first and second sectors (10) of the tread band (6) are provided with axially opposite side walls (9a, 9b, 10a, 10b) defining a tapering angle (α, β), measured with respect to a plane (λ) extending substantially perpendicularly to the radially inner (9c, 10c) and radially outer (9d, 10d) faces of the sectors (9, 10), comprised between about 30° and about 80°.

10. Pneumatic tire (1) according to claim 9, wherein the axially opposite side walls (9a, 9b, 10a, 10b) of said first (9) and second (10) sectors of the tread band (6) are substantially rectilinear.

11. Pneumatic tire (1) according to claim 9, wherein the axially opposite side walls (9a, 9b, 10a, 10b) of said first (9) and second (10) sectors of the tread band (6) are provided with at least one substantially curvilinear portion.

12. Pneumatic tire (1) according to claim 1, wherein said tread band (6) is provided with a tread pattern including a plurality of grooves (11) and wherein said grooves (11) are formed in said first sectors (9) of the tread band (6).

13. Pneumatic tire (1) according to claim 1, wherein said tread band (6) is provided with a tread pattern including a plurality of grooves (11) and wherein said grooves (11) are formed in said second sectors (10) of the tread band (6).

14. Pneumatic tire (1) according to claim 1, wherein said first (9) and said second (10) sectors of the tread band (6) are radially extending substantially for the entire thickness of the tread band (6).

15. Pneumatic tire (1) according to claim 1, further comprising a layer (12) of a suitable elastomeric material interposed between the tread band (6) and the belt structure (5).

16. Process for manufacturing a pneumatic tire (1) comprising the steps of:
a) manufacturing a carcass structure (2) having at least one carcass ply (2a) associated to at least one annular reinforcing structure (3);
b) making a belt structure (5);
c) arranging, at a radially outer position with respect to said belt structure (5), a plurality of first sectors (9) of a tread band (6), axially spaced apart, tapered along a radially inner direction and substantially consisting of a first elastomeric material having after vulcanization a predetermined value of the Shore A hardness at 23°C, measured according to standard DIN 53505 and a predetermined value of the modulus of elasticity (E') under compression at 23°C;
d) arranging, at a radially outer position with respect to said belt stricture (5), a plurality of second sectors (10) of the tread band (6), axially spaced apart, tapered along a radially outer direction and substantially consisting of a second elastomeric material having after vulcanization a value of the Shore A hardness at 23°C, measured according to standard DIN 53505 and a value of the modulus of elasticity (E') under compression at 23°C such that:
d1) the ratio between the Shore A hardness at 23°C of the first elastomeric material, measured according to standard DIN 53505 and the Shore A hardness at 23°C of the second elastomeric material, measured according to standard DIN 53505, is greater than 1.10; and
d2) the ratio between the modulus of elasticity (E') under compression at 23°C of said first elastomeric material and the modulus of elasticity (E') under compression at 23°C of said second elastomeric material is greater than about 1.15;
wherein steps c) and d) are carried out in such a way that said first (9) and second (10) sectors of the tread band (6) are axially positioned side-by-side one after the other along the transversal development of the tread band (6).

17. Process according to claim 16, wherein said belt structure (5) is made on a substantially cylindrical auxiliary drum (18') and wherein said steps c) and d) comprise the steps of:
e) positioning said auxiliary drum (18') at a first delivery member (22) of the first elastomeric material;
f) delivering by means of said first delivery member (22) at least one elongated element (24) made of said first elastomeric material on the belt structure (5) while carrying out a relative displacement between the first delivery member (22) and the auxiliary drum (18') so as to form said first sectors (9) of the tread band (6) axially spaced apart and tapered along a radially inner direction;
g) positioning the auxiliary drum (18') at a second delivery member (25) of the second elastomeric material;
h) delivering by means of said second delivery member (25) at least one elongated element (27) made of said second elastomeric material on the belt structure (5) while carrying out a relative displacement between the second delivery member (25) and the auxiliary drum (18') so as to form said second sectors (10) of the tread band (6) axially spaced apart and tapered along a radially outer direction.

18. Process according to claim 17, wherein said steps f) and h) of delivering the elongated elements (24, 27) of said first and second elastomeric materials are carried out by rotating said auxiliary drum (18') about its rotation axis (X-X).

19. Process according to claim 17 or 18, wherein the relative displacement between the delivery member (22, 25) and the auxiliary drum (18') is carried out by imparting to the auxiliary drum (18') a first translational movement along a direction substantially parallel to its rotation axis (X-X) and/or a second translational movement along a direction substantially perpendicular to said axis (X-X).

20. Process according to claim 17, wherein said steps f) and h) of delivering the elongated elements of said first and second elastomeric materials are carried out by forming a plurality of coils axially arranged side-by-side and/or radially superposed to define said first (9) and said second (10) sectors of the tread band (6) axially positioned side-by-side one after the other.

21. Process according to claim 16, wherein said belt structure (5) is assembled on a substantially toroidal support (18, 28) and wherein said steps c) and d) comprise the steps of:
e') positioning said substantially toroidal support (18, 28) at a first delivery member (22, 32) of the first elastomeric material;
f) delivering by means of said first delivery member (22, 32) at least one elongated element made of said first elastomeric material at a radially outer position with respect to said belt structure (5) while carrying out a relative displacement between the first delivery member (22, 32) and the substantially toroidal support (18, 28), so as to form said first sectors (9) of the tread band (6) axially spaced apart and tapered along a radially inner direction towards the belt structure (5);
g') positioning the substantially toroidal support (18, 28) at a second delivery member (25, 34) of the second elastomeric material;
h') delivering by means of said second delivery member (25, 34) at least one elongated element made of said second elastomeric material at a radially outer position with respect to said belt structure (5) while carrying out a relative displacement between the second delivery member (25, 34) and the substantially toroidal support (18, 28), so as to form said second sectors (10) of the tread band (6) axially spaced apart and tapered along the radially outer direction.

22. Process according to claim 21, wherein said steps f) and h') of delivering the elongated elements of said first and second elastomeric materials are carried out by rotating said substantially toroidal support (18, 28) about its rotation axis (X-X).

23. Process according to claim 21 or 22, wherein the relative displacement between the delivery member (32, 34) and the substantially toroidal support (18, 28) is carried out by imparting to the substantially toroidal support (18, 28) a first translational movement along a direction substantially parallel to its rotation axis (X-X) and/or a second translational movement along a direction substantially perpendicular to said axis (X-X).

24. Process according to claim 21, wherein said steps f') and h') of delivering the elongated elements of said first and second elastomeric materials are carried out by forming a plurality of coils axially arranged side-by-side and/or radially superposed to define said first (9) and second (10) sectors of the tread band (6) axially positioned side-by-side one after the other.

25. Process according to claim 21, wherein said substantially toroidal support (28) is substantially rigid.

## Patentansprüche

1. Pneumatischer Reifen (1), der eine Karkassenstruktur (2), die wenigstens eine Karkassenlage (2a) aufweist, und wenigstens eine ringförmige Verstärkungsstruktur (3), die mit der Karkassenlage (2a) assoziiert ist, ein Laufflächenband (6), das aus einem Elastomermaterial gefertigt ist, an einer radialen Außenposition bezüglich der Karkassenstruktur (2), eine Gürtelstruktur (5), die zwischen der Karkassenstruktur (2) und dem Laufflächenband (6) vorgesehen ist, und ein Paar von axial gegenüberliegenden Seitenwänden (7, 8) auf der Karkassenstruktur (2) umfasst,
wobei das Laufflächenband (6) umfasst:
i) eine Mehrzahl von ersten Sektoren (9), die axial beabstandet und entlang einer radialen Innenrichtung zugespitzt sind, und
ii) eine Mehrzahl von zweiten Sektoren (10), die axial beabstandet und entlang einer radialen Außenrichtung zugespitzt sind,
bei dem die ersten (9) und zweiten (10) Sektoren axial Seite an Seite, einer nach dem anderen entlang der Querentwicklung des Laufflächenbands (6) positioniert sind,
bei dem das Verhältnis zwischen der Shore A Härte bei 23°C der ersten Sektoren (9), gemessen gemäß Standard DIN 53505, und der Shore A Härte bei 23°C der zweiten Sektoren (10), gemessen gemäß Standard DIN 53505, größer als 1,10 ist, und
das Verhältnis zwischen dem Elastizitätsmodul (E') unter Kompression bei 23°C der ersten Sektoren (9) und dem Elastizitätsmodul (E') unter Kompression bei 23°C der zweiten Sektoren (10) größer als ungefähr 1,15 ist.

2. Pneumatischer Reifen (1) nach Anspruch 1, bei dem das Verhältnis zwischen der Shore A Härte bei 23°C der ersten Sektoren (9), gemessen gemäß Standard DIN 53505, und der Shore A Härte bei 23°C der zweiten Sektoren (10), gemessen gemäß Standard DIN 53505, im Bereich von ungefähr 1,12 bis ungefähr 1,70 liegt.

3. Pneumatischer Reifen (1) nach Anspruch 1, bei dem die Shore A Härte bei 23°C der ersten Sektoren (9), gemessen gemäß Standard DIN 53505, im Bereich von ungefähr 60 bis ungefähr 75 liegt.

4. Pneumatischer Reifen (1) nach Anspruch 1, bei dem die Shore A Härte bei 23°C der zweiten Sektoren (10), gemessen gemäß Standard DIN 53505, im Bereich von ungefähr 35 bis ungefähr 65 liegt.

5. Pneumatischer Reifen (1) nach Anspruch 1, bei dem die ersten Sektoren (9) des Laufflächenbands (6) ein Elastizitätsmodul (E') unter Kompression bei 23°C aufweisen, das im Bereich von ungefähr 7 bis ungefähr 13 MPa liegt.

6. Pneumatischer Reifen (1) nach Anspruch 1, bei dem die zweiten Sektoren (10) des Laufflächenbands (6) ein Elastizitätsmodul (E') unter Kompression bei 23°C aufweisen, das im Bereich von ungefähr 5 bis ungefähr 8 MPa liegt.

7. Pneumatischer Reifen (1) nach Anspruch 1, bei dem das Verhältnis zwischen dem Elastizitätsmodul (E') unter Kompression bei 23°C der ersten Sektoren (9) und dem Elastizitätsmodul (E') unter Kompression bei 23°C der zweiten Sektoren (10) im Bereich von ungefähr 1,4 bis ungefähr 2,0 liegt.

8. Pneumatischer Reifen (1) nach Anspruch 1, bei dem die ersten und zweiten Sektoren (10) des Laufflächenbands (6) einer nach dem anderen mit einem im Wesentlichen konstanten Abstand (p) entlang der Querentwicklung des Laufflächenbands (6) axial verteilt sind.

9. Pneumatischer Reifen (1) nach Anspruch 1, bei dem die ersten und zweiten Sektoren (10) des Laufflächenbands (6) mit axial gegenüberliegenden Seitenwänden (9a, 9b, 10a, 10b) vorgesehen sind, die einen Zuspitzungswinkel (α, β) definieren, gemessen bezüglich einer Ebene (λ), die sich bezüglich der radialen Innen- (9c, 10c) und radialen Außenflächen der Sektoren (9, 10) im Wesentlichen senkrecht erstreckt, der im Bereich von ungefähr 30° bis ungefähr 80° liegt.

10. Pneumatischer Reifen (1) nach Anspruch 9, bei dem die axial gegenüberliegenden Seitenwände (9a, 9b, 10a, 10b) der ersten (9) und zweiten (10) Sektoren des Laufflächenbands (6) im Wesentlichen geradlinig sind.

11. Pneumatischer Reifen (1) nach Anspruch 9, bei dem die axial gegenüberliegenden Seitenwände (9a, 9b, 10a, 10b) der ersten (9) und zweiten (10) Sektoren des Laufflächenbands (6) mit wenigstens einem im Wesentlichen gekrümmten Abschnitt vorgesehen sind.

12. Pneumatischer Reifen (1) nach Anspruch 1, bei dem das Laufflächenband (6) mit einem Laufflächenmuster vorgesehen ist, das eine Mehrzahl von Nuten (11) enthält, und bei dem die Nuten (11) in den ersten Sektoren (9) des Laufflächenbands (6) ausgebildet sind.

13. Pneumatischer Reifen (1) nach Anspruch 1, bei dem das Laufflächenband (6) mit einem Laufflächenmuster vorgesehen ist, das eine Mehrzahl von Nuten (11) enthält und bei dem die Nuten (11) in den zweiten Sektoren (10) des Laufflächenbands (6) ausgebildet sind.

14. Pneumatischer Reifen (1) nach Anspruch 1, bei dem sich die ersten (9) und zweiten (10) Sektoren des Laufflächenbands (6) radial im Wesentlichen über die gesamte Dicke des Laufflächenbands (6) erstrecken.

15. Pneumatischer Reifen (1) nach Anspruch 1, der ferner eine Schicht (12) aus einem geeigneten Elastomermaterial umfasst, die zwischen dem Laufflächenband (6) und der Gürtelstruktur (5) vorgesehen ist.

16. Verfahren zur Herstellung eines pneumatischen Reifens (1), umfassend die Schritte:
a) Herstellen einer Karkassenstruktur (2), die wenigstens eine Karkassenschicht (2a) aufweist, die mit wenigstens einer ringförmigen Verstärkungsstruktur (3) assoziiert ist;
b) Fertigen einer Gürtelstruktur (5);
c) Anordnen, an einer radialen Außenposition bezüglich der Gürtelstruktur (5), einer Mehrzahl von ersten Sektoren (9) eines Laufflächenbands (6), axial beabstandet, zugespitzt entlang einer radialen Innenrichtung und im Wesentlichen bestehend aus einem ersten Elastomermaterial, das nach Vulkanisierung einen vorbestimmten Wert der Shore A Härte bei 23°C, gemessen gemäß Standard DIN 53505, und ein vorbestimmtes Elastizitätsmodul (E') unter Kompression bei 23°C aufweist;
d) Anordnen, an einer radialen Außenposition bezüglich der Gürtelstruktur (5), einer Mehrzahl von zweiten Sektoren (10) des Laufflächenbands (6), axial beabstandet, zugespitzt entlang einer radialen Innenrichtung und im Wesentlichen bestehend aus einem zweiten Elastomermaterial, das nach Vulkanisierung einen Wert der Shore A Härte bei 23°C, gemessen gemäß Standard DIN 53505, und einen Wert des Elastizitätsmodul (E') unter Kompression bei 23°C aufweist, so dass:
d1) das Verhältnis zwischen der Shore A Härte bei 23°C des ersten Elastomermaterials, gemessen gemäß Standard DIN 53505, und der Shore A Härte bei 23°C des zweiten Elastomermaterials, gemessen gemäß Standard DIN 53505, größer als 1,10 ist; und
d2) das Verhältnis des Elastizitätsmoduls (E') unter Kompression bei 23°C des ersten Elastomermaterials und des Elastizitätsmodul unter Kompression bei 23°C des zweiten Elastomermaterials größer als ungefähr 1,15 ist;
wobei die Schritte c) und d) auf eine solche Weise ausgeführt werden, dass die ersten (9) und zweiten (10) Sektoren des Laufflächenbands (6) axial Seite an Seite, einer nach dem anderen entlang der Querentwicklung des Laufflächenbands (6) positioniert werden.

17. Verfahren nach Anspruch 16, bei dem die Gürtelstruktur (5) auf einer im Wesentlichen zylindrischen Hilfstrommel (18') gefertigt wird und bei dem die Schritte c) und d) die Schritte umfassen:
e) Positionieren der Hilfstrommel (18') an einem ersten Zuführelement (22) aus dem ersten Elastomermaterial;
f) Zuführen, mittels des ersten Zuführelements (22), wenigstens eines länglichen Elements (24), das aus dem ersten Elastomermaterial gefertigt ist, an die Gürtelstruktur (5), während des Ausführens einer relativen Versetzung zwischen dem ersten Zuführelement (22) und der Hilfstrommel (18'), um die ersten Sektoren (9) des Laufflächenbands (6) axial beabstandet und entlang einer radialen Innenrichtung zugespitzt auszubilden;
g) Positionieren der Hilfstrommel (18') an einem zweiten Zuführelement (25) des zweiten Elastomermaterials;
h) Zuführen, mittels des zweiten Zuführelements (25), wenigstens eines länglichen Elements (27), das aus dem zweiten Elastomermaterial gefertigt ist, an die Gürtelstruktur (5), während des Ausführens einer relativen Versetzung zwischen dem zweiten Zuführelement (25) und der Hilfstrommel (18'), um die zweiten Sektoren (10) des Laufflächenbands (6) axial beabstandet und entlang einer radialen Außenrichtung zugespitzt auszubilden.

18. Verfahren nach Anspruch 17, bei dem die Schritte f) und h) des Zuführens der länglichen Elemente (24, 27) der ersten und zweiten Elastomermaterialien durch Drehen der Hilfstrommel (18') um deren Drehachse (X-X) ausgeführt werden.

19. Verfahren nach Anspruch 17 oder 18, bei dem die relative Versetzung zwischen dem Hilfselement (22, 25) und der Hilfstrommel (18') durch Vermitteln einer ersten Translationsbewegung an die Hilfstrommel (18') entlang einer Richtung im Wesentlichen parallel zu deren Drehachse (X-X) und/oder einer zweiten Translationsbewegung entlang einer Richtung im Wesentlichen senkrecht zur Achse (X-X) ausgeführt wird.

20. Verfahren nach Anspruch 17, bei dem die Schritte f) und h) des Zuführens der länglichen Elemente aus den ersten und zweiten Elastomermaterialien durch Ausbilden einer Mehrzahl von Wicklungen ausgeführt werden, die Seite an Seite und/oder radial überlagert angeordnet sind, um die ersten (9) und zweiten (10) Sektoren des Laufflächenbands (6) axial Seite an Seite, einer nach dem anderen positioniert zu definieren.

21. Verfahren nach Anspruch 16, bei dem die Gürtelstruktur (5) auf einem im Wesentlichen toroidförmige Träger (18, 28) montiert wird, und wobei die Schritte c) und d) die Schritte umfassen:
e') Positionieren des im Wesentlichen toroidförmige Trägers (18, 28) an einem ersten Zuführelement (22, 32) des ersten Elastomermaterials;
f') Zuführen, mittels des ersten Zuführelements (22, 32), wenigstens eines länglichen Elements, das aus dem ersten Elastomermaterial gefertigt ist, an eine radiale Außenposition bezüglich der Gürtelstruktur (5), während eine relative Versetzung zwischen dem ersten Zuführelement (22, 32) und dem im Wesentlichen toroidförmigen Träger (18, 28) ausgeführt wird, so dass die ersten Sektoren (9) des Laufflächenbands (6) axial beabstandet und entlang einer radialen Innenrichtung zur Gürtelstruktur (5) zugespitzt ausgebildet werden;
g') Positionieren des im Wesentlichen toroidförmigen Trägers (18, 28) an einem zweiten Zuführelement (25, 34) des zweiten Elastomermaterials;
h') Zuführen, mittels des zweiten Zuführelements (25, 34), wenigstens eines länglichen Elements (27), das aus dem zweiten Elastomermaterial gefertigt ist, an eine radiale Außenposition bezüglich der Gürtelstruktur (5), während eine relative Versetzung zwischen dem zweiten Zuführelement (25) und dem im Wesentlichen toroidförmigen Träger (18, 28) ausgeführt wird, so dass die zweiten Sektoren (10) des Laufflächenbands axial beabstandet und entlang einer radialen Außenrichtung zugespitzt ausgebildet werden.

22. Verfahren nach Anspruch 21, bei dem die Schritte f') und h') des Zuführens der länglichen Elemente aus den ersten und zweiten Elastomermaterialien durch Drehen des im Wesentlichen toroidförmigen Trägers (18, 28) um dessen Drehachse (X-X) ausgeführt werden.

23. Verfahren nach Anspruch 21 oder 22, bei dem die relative Versetzung zwischen dem Zuführelement (32, 34) und dem im Wesentlichen toroidförmigen Träger (18, 28) durch Vermitteln an den im Wesentlichen toroidförmigen Träger (18, 28) einer ersten Translationsbewegung entlang einer Richtung im Wesentlichen parallel zu dessen Drehachse (X-X) und/oder einer zweiten Translationsbewegung entlang einer Richtung im Wesentlichen senkrecht zur Achse (X-X) ausgeführt wird.

24. Verfahren nach Anspruch 21, bei dem die Schritte f') und h') des Zuführens der länglichen Elemente aus dem ersten und zweiten Elastomermaterial durch Ausbilden einer Mehrzahl von Wicklungen ausgeführt werden, die Seite an Seite und/oder radial überlagert angeordnet werden, um die ersten (9) und zweiten (10) Sektoren des Laufflächenbands (6) axial Seite an Seite, einer nach dem anderen positioniert zu definieren.

25. Verfahren nach Anspruch 21, bei dem der im Wesentlichen toroidförmige Träger (28) im Wesentlichen fest ist.

## Revendications

1. Pneu (1) comprenant une structure de carcasse (2) comportant au moins une couche de carcasse (2a) et au moins une structure de renforcement annulaire (3) associée à ladite couche de carcasse (2a), une bande de roulement (6) constituée d'un matériau élastomère situé à un emplacement radialement extérieur par rapport à ladite structure de carcasse (2), une structure de ceinture (5) interposée entre ladite structure de carcasse (2) et ladite bande de roulement (6) et une paire de flancs axialement opposés (7, 8) disposés sur ladite structure de carcasse (2),
dans lequel la bande de roulement (6) comprend :
i) une pluralité de premiers secteurs (9) espacés axialement les uns des autres et allant en se rétrécissant dans une direction radialement intérieure, et
ii) une pluralité de deuxièmes secteurs (10) espacés axialement et allant en se rétrécissant dans une direction radialement extérieure,
dans lequel les premier (9) et deuxième (10) secteurs sont positionnés axialement côte à côte les uns à la suite des autres le long du développement transversal de la bande de roulement (6), dans lequel le rapport entre la dureté Shore A à 23°C des premiers secteurs (9) mesurée selon la norme DIN 53505, et la dureté Shore A à 23°C des deuxièmes secteurs (10) mesurée selon la norme DIN 53505, est supérieur à 1, 10, et
dans lequel le rapport entre le module d'élasticité (E') sous compression à 23°C desdits premiers secteurs (9) et le module d'élasticité (E') sous compression à 23°C desdits deuxièmes secteurs (10) est supérieur à environ 1, 15.

2. Pneu (1) selon la revendication 1, dans lequel le rapport entre la dureté Shore A à 23°C des premiers secteurs (9), mesurée selon la norme DIN 53505, et la dureté Shore A à 23°C des deuxièmes secteurs (10), mesurée selon la norme DIN 53505, est compris entre environ 1, 12 et environ 1, 70.

3. Pneu (1) selon la revendication 1, dans lequel la dureté Shore A à 23°C des premiers secteurs (9), mesurée selon la norme DIN 53505, est comprise entre environ 60 et environ 75.

4. Pneu (1) selon la revendication 1, dans lequel la dureté Shore A à 23°C des deuxièmes secteurs (10), mesurée selon la norme DIN 53505, est comprise entre environ 35 et environ 65.

5. Pneu (1) selon la revendication 1, dans lequel lesdits premiers secteurs (9) de la bande de roulement (6) ont un module d'élasticité (E') à la compression à 23°C compris entre environ 7 MPa et environ 13 MPa.

6. Pneu (1) selon la revendication 1, dans lequel lesdits deuxièmes secteurs (10) de la bande de roulement (6) ont un module d'élasticité (E') à la compression à 23°C compris entre environ 5 MPa et environ 8 MPa.

7. Pneu (1) selon la revendication 1, dans lequel le rapport entre le module d'élasticité (E') à la compression à 23°C desdits premiers secteurs (9) et le module d'élasticité (E') à la compression à 23°C desdits deuxièmes secteurs (10) est compris entre environ 1,4 et environ 2,0.

8. Pneu (1) selon la revendication 1, dans lequel lesdits premier et deuxième secteurs (9, 10) de la bande de roulement (6) sont répartis axialement les uns à la suite des autres avec un pas (p) substantiellement constant sur le développement transversal de la bande de roulement (6).

9. Pneu (1) selon la revendication 1, dans lequel lesdits premier et deuxième secteurs (9, 10) de la bande de roulement (6) comportent des parois latérales axialement opposées (9a, 9b, 10a, 10b) qui définissent un angle de convergence (α, β), mesuré par rapport à un plan (λ) qui s'étend substantiellement perpendiculairement aux faces radialement intérieures (9c, 10c) et radialement extérieures (9d, 10d) des secteurs (9, 10), compris entre environ 30° et environ 80°.

10. Pneu (1) selon la revendication 9, dans lequel les parois latérales axialement opposées (9a, 9b, 10a, 10b) desdits premiers (9) et deuxièmes (10) secteurs de la bande de roulement (6) sont substantiellement rectilignes.

11. Pneu (1) selon la revendication 9, dans lequel les parois latérales axialement opposées (9a, 9b, 10a, 10b) desdits premiers (9) et deuxièmes (10) secteurs de la bande de roulement (6) comportent au moins une partie substantiellement courbe.

12. Pneu (1) selon la revendication 1, dans lequel ladite bande de roulement (6) est dotée d'un dessin de surface de roulement comportant une pluralité de gorges (11) et
dans lequel lesdites gorges (11) sont formées dans lesdits premiers secteurs (9) de la bande de roulement (6).

13. Pneu (1) selon la revendication 1, dans lequel ladite bande de roulement (6) est dotée d'un dessin de surface de roulement comportant une pluralité de gorges (11) et
dans lequel lesdites gorges (11) sont formées dans lesdits deuxièmes secteurs (10) de la bande de roulement (6).

14. Pneu (1) selon la revendication 1, dans lequel lesdits premiers (9) et lesdits deuxièmes (10) secteurs de la bande de roulement (6) s'étendent radialement substantiellement sur toute l'épaisseur de la bande de roulement (6).

15. Pneu (1) selon la revendication 1 comprenant en outre une couche (12) d'un matériau élastomère adéquat interposé entre la bande de roulement (6) et la structure de ceinture (5).

16. Procédé de fabrication d'un pneu (1) comprenant les étapes consistant à :
a) confectionner une structure de carcasse (2) comportant au moins une couche de carcasse (2a) associée à au moins une structure de renforcement annulaire (3) ;
b) réaliser une structure de ceinture (5) ;
c) agencer, à un emplacement radialement extérieur par rapport à ladite structure de ceinture (5), une pluralité de premiers secteurs (9) d'une bande de roulement (6), qui sont espacés axialement les uns des autres, et qui vont en se rétrécissant dans une direction radialement intérieure, et qui sont substantiellement constitués d'un premier matériau élastomère qui présente, après vulcanisation, une valeur prédéterminée de la dureté Shore A à 23°C, mesurée selon la norme DIN 53505 et une valeur prédéterminée du module d'élasticité (E') à la compression à 23°C ;
d) agencer, à un emplacement radialement extérieur par rapport à ladite structure de ceinture (5), une pluralité de deuxièmes secteurs (10) de la bande de roulement (6) axialement espacés les uns des autres, allant en se rétrécissant dans une direction radialement extérieure et constitués substantiellement d'un deuxième matériau élastomère présentant, après vulcanisation, une valeur de la dureté Shore A à 23°C, mesurée selon la norme DIN 53505 et une valeur du module d'élasticité (E') à la compression à 23°C, telle que :
d1) le rapport entre la dureté Shore A à 23°C du premier matériau élastomère, mesurée selon la norme DIN 53505 et la dureté Shore A à 23°C du deuxième matériau élastomère, mesurée selon la norme DIN 53505, est supérieur à 1, 10 ; et que,
d2) le rapport entre le module d'élasticité (E') à la compression à 23°C dudit premier matériau élastomère et le module d'élasticité (E') à la compression à 23°C dudit deuxième matériau élastomère est supérieur à environ 1, 15 ; les étapes c) et d) étant exécutées de telle manière que lesdits premiers (9) et
deuxièmes (10) secteurs de la bande de roulement (6) sont positionnés axialement côte à côte les uns à la suite des autres sur le développement transversal de la bande de roulement (6).

17. Procédé selon la revendication 16, dans lequel ladite structure de ceinture (5) est réalisée sur un tambour auxiliaire substantiellement cylindrique (18') et dans lequel lesdites étapes c) et d) comprennent les opérations consistant à :
e) positionner ledit tambour auxiliaire (18') à proximité d'un premier élément d'alimentation (22) en premier matériau élastomère ;
f) déposer sur la structure de ceinture (5) au moyen dudit premier élément d'alimentation (22), au moins un élément oblong (24) constitué dudit premier matériau élastomère, tout en exécutant un déplacement relatif entre le premier élément d'alimentation (22) et le tambour auxiliaire (18') de manière à réaliser lesdits premiers secteurs (9) de la bande de roulement (6) qui sont axialement espacés les uns des autres et qui vont en se rétrécissant dans une direction radialement intérieure ;
g) positionner le tambour auxiliaire (18') à proximité d'un deuxième élément d'alimentation (25) en deuxième matériau élastomère ;
h) déposer sur la structure de ceinture (5) au moyen dudit deuxième élément d'alimentation (25), au moins un élément oblong (27), constitué dudit deuxième matériau élastomère, tout en exécutant un déplacement relatif entre le deuxième élément d'alimentation (25) et le tambour auxiliaire (18') de manière à réaliser lesdits deuxièmes secteurs (10) de la bande de roulement (6) qui sont axialement espacés les uns des autres et qui vont en se rétrécissant dans une direction radialement extérieure.

18. Procédé selon la revendication 17, dans lequel lesdites opérations f) et h) de dépôt des éléments oblongs (24, 27) des premier et deuxième matériaux élastomères sont exécutées en faisant tourner ledit tambour auxiliaire (18') sur son axe de rotation (X-X).

19. Procédé selon la revendication 17 ou 18, dans lequel le déplacement relatif entre l'élément d'alimentation (22, 25) et le tambour auxiliaire (18') est exécuté en conférant au tambour auxiliaire (18') un premier mouvement de translation dans une direction sensiblement parallèle à son axe de rotation (X-X) et/ou un deuxième mouvement de translation dans une direction substantiellement perpendiculaire audit axe (X-X).

20. Procédé selon la revendication 17, dans lequel lesdites opérations f) et h) de dépôt des éléments oblongs desdits premier et deuxième matériaux élastomères sont exécutées en réalisant une pluralité de spires disposées axialement côte à côte et/ou radialement superposées, afin de définir lesdits premiers (9) et lesdits deuxièmes (10) secteurs de la bande de roulement (6) positionnés axialement côte à côte, les uns à la suite des autres.

21. Procédé selon la revendication 16, dans lequel ladite structure de ceinture (5) est assemblée sur un support substantiellement toroïdal (18, 28) et dans lequel lesdites étapes c) et d) comprennent les opérations consistant à :
e') positionner ledit support substantiellement toroïdal (18, 28) à proximité d'un premier élément d'alimentation (22, 32) en premier matériau élastomère ;
f') fournir au moyen dudit premier élément d'alimentation (22, 32) au moins un élément oblong constitué dudit premier matériau élastomère à un emplacement radialement extérieur par rapport à ladite structure de ceinture (5) tout en exécutant un déplacement relatif entre le premier élément d'alimentation (22, 32) et le support substantiellement toroïdal (18, 28) de manière à réaliser lesdits premiers secteurs (9) de la bande de roulement (6) qui sont espacés axialement les uns des autres et qui vont en se rétrécissant dans une direction radialement intérieure, vers la structure de ceinture (5) ;
g') positionner le support substantiellement toroïdal (18, 28) à proximité du deuxième élément d'alimentation (25, 34) en deuxième matériau élastomère ;
h') fournir au moyen dudit deuxième élément d'alimentation (25, 34) au moins un élément oblong constitué dudit deuxième matériau élastomère, à un emplacement radialement extérieur par rapport à ladite structure de ceinture (5), tout en exécutant un déplacement relatif entre le deuxième élément d'alimentation (25, 34) et le support substantiellement toroïdal (18, 28) de manière à réaliser lesdits deuxièmes secteurs (10) de la bande de roulement (6) qui sont espacés axialement les uns des autres et qui vont en se rétrécissant dans la direction radialement extérieure.

22. Procédé selon la revendication 21, dans lequel lesdites opérations f) et h') de dépôt des éléments oblongs desdits premier et deuxième matériaux élastomères sont exécutées en faisant tourner ledit support substantiellement toroïdal (18, 28) sur son axe de rotation (X-X).

23. Procédé selon la revendication 21 ou 22, dans lequel le déplacement relatif entre l'élément d'alimentation (32, 34) et le support substantiellement toroïdal (18, 28) est exécuté en imprimant au support substantiellement toroïdal (18, 28) un premier mouvement de translation dans une direction substantiellement parallèle à son axe de rotation (X-X) et/ou un deuxième mouvement de translation dans une direction substantiellement perpendiculaire audit axe (X-X).

24. Procédé selon la revendication 21, dans lequel lesdites opérations f) et h') de dépôt des éléments oblongs des premier et deuxième matériaux élastomères sont exécutées en réalisant une pluralité de spires disposées axialement côte à côte et/ou radialement superposées afin de définir lesdits premiers (9) et deuxièmes (10) secteurs de la bande de roulement (6) positionnés axialement côte à côte les uns à la suite des autres.

25. Procédé selon la revendication 21, dans lequel ledit support substantiellement toroïdal (28) est substantiellement rigide.
